# EUROPEAN PATENT APPLICATION

(11) **EP 1 947 063 A2**
(43) Date of publication of application: **23.07.2008**
(21) Application number: 06807866.6
(22) Date of filing: 19.07.2006
(51) Int. Cl.: C02F 11/02, C02F 3/32, B09B 3/00

(54) **COMPOSITION AND METHOD FOR THE TREATMENT OF INDUSTRIAL AND URBAN SOLID AND SEMI-SOLID WASTE CONTAINING BIODEGRADABLE ORGANIC MATERIAL**

(30) Priority: 19.07.2005 ES 200501760
(71) Applicant: Bionatur Biotechnologies S.L., 08019 Barcelona (ES)
(72) Inventor: GARCIA-BLAIRSY REINA, Guillermo, 35007 Las Palmas de Gran Canaria (ES); MIRO ESPINOS, José, Barcelona 08015 (ES)
(74) Representative: Ungria Lopez, Javier
(86) International application number: PCT/ES2006/000418
(87) International publication number: WO 2007/010068

(57) **Abstract**

The present invention relates to a composition for treating solid waste and semi-solid waste (sludges), urban or industrial, containing biodegradable organic matter and which is applied to the waste, **characterised in that** the composition is a mixture of particles of red algae (division *Rhodophyta*) and particles of brown algae (division *Phaeophyta*), both dehydrated and chemically untreated, and to its use in the treatment of said waste.

## Description

### TECHNICAL FIELD OF THE INVENTION

The present invention comes within the technical field of processes, methods and products destined for treatment of solid and semi-solid (=sludges), urban and industrial, waste, containing biodegradable organic matter, such as for example the treatment of urban solid waste, which cause important problems concerning environmental contamination and public health.

### STATE OF THE PRIOR ART OF THE INVENTION

The elimination of urban and industrial solid and semi-solid waste containing biodegradable organic matter currently implies a serious environmental problem, and that is becoming increasingly worse. Current treatment and recycling systems are insufficient, inefficient and, sometimes, contaminating, hence, many dumps still operate without any kind of treatment or recycling since the "solutions" sometimes make the problem worse, or they convert the treatment into a process that is excessively expensive.

Many of the current recycling systems for urban solid waste produce waste which can vary between 30% and 60% of the quantity of treated matter, which implies a need to have dumps similar to those used tor the elimination of untreated waste (in addition to "technically advanced" waste).

A very common process is that of composting, a process of thermophilic and aerobic fermentation of organic matter by means of which the organic fraction is decomposed by the natural microorganisms colonising it (or by new strains which become inoculated in the fermentation pile). It is assumed that the compost obtained is an innocuous product, characterised by an absence of pathogens and with fertilising properties for farmland. But this process, applied to huge quantities of urban solid waste, requires a good prior separation of non-organic compounds from the waste so that it can then be applied in agriculture. Moreover, it is a process that consumes a lot of time and surface area, it generates toxic leachates and bad odours, and the farmer is very reluctant to use them in the field owing to the high risk of soil contamination implied by urban and industrial waste.

An alternative to composting is incineration of urban and industrial waste containing a high content of organic, matter (for example, pulp from the cellulose industries), by burning it at high temperatures, which eliminates the need for an organic matter dump but it generates a lot of environmental problems and therefore leads to strong opposition, both social and ecological and economic (following the implementation of greenhouse gas emission quotas by the Kyoto Protocol).

The filling up of existing dumps, the difficulty of finding new sites for new dumps, the considerable social, ecological and political opposition, atmospheric contamination, the discharges of toxic leachates into the water table and the considerable emissions of greenhouse gases (CO₂ and methane) have not been resolved in a manner that combines high efficiency, low cost and zero environment harm.

Basically, industrial innovations for treatment of solid waste are focused on:
* processes and machinery for the collection and/or separation and/or crushing and/or transportation of solid waste (which, for example, introduce new stages and/or machines for the collection and separation of waste, or treatment systems by fragmentation or grinding; or in transportation systems of the tromel type, and/or crushers with shafts having low speeds of revolution with hydraulic drive, disc separators, etc.),
* anaerobic processes of biodegradation of the organic matter in order to obtain combustible gas,
* the use of microwaves for sterilisation and dehydration of waste,
* the use of sulphate and lactobacillus reducing bacteria,
* the addition of quicklime to waste that has previously been sieved and crushed and the application of escape gases for drying them and being able to use them as fuel
* processes of drying, drainage and extraction of oil from the waste (for example tor treatment ot waste from vegetable oil processing industries)
* the use of worms for biodegradation of ligno-cellulose solid waste

Processes and installations of the kind stated above are to be found described in, for example, the following publications
- US 5.568 996:

- ES 2 212 519 T3 (process and installations associated with the treatment and elimination of waste);
   ES 2 187 325 A1 (Treatment system for urban solid waste);
- ES 2 103 464 T3 (method and apparatus for the regulated reduction of organic matter);
- ES 2 107 881 T3 (Treatment of slurries and refuse containing sulphates and heavy metals by means of sulphate and lactobacillus reducing bacteria);
   ES 2 176 691 T3 (Procedure and installation of treatment of organic refuse and applications of said procedure);
- ES 2 172 459 A1 (Procedure and device for the treatment of urban solid waste),
- ES 2 173 787 A1 (procedure and installation for the treatment of solid waste from oil extraction processes for oily products such as olives and similar);
- ES 2 128 894 A1 (procedure for manufacturing a solid combustible material starting from urban and/or industrial solid waste comparable to urban and/or agricultural waste);
- ES 2 063 678 A1 (biodegradation process for ligno-cellulose waste coming from the paper industry),
- US-5.055.402: This document discloses a composition which comprises algae, for eliminating heavy metals from an aqueous solution. The algae can be red or brown algae, and cited among the examples is a combination of the genus *Cyanidium - Laminaria*. Nevertheless, this is not a mere mixture of algae but instead algae that have been chemically treated, specifically with sodium hydroxide, with spheres being formed by dripping the mixture on a solution of calcium chloride, which are extracted from the chloride and then undergo later treatments until being dried in an oven.

Although the technologies that have been developed in recent years have implied improvements, various disadvantages continue to present themselves, such as:
- emission of bad odours
- discharge of highly contaminating and pestilent leached waters.
- hazards in the processes of crushing the waste and the piping and storage of the gases generated in the anaerobic processes of waste treatment.
- Need to consume additional energy for the treatment.
- Blockage and inefficiency of waste separation systems.
- Extreme duration of the composting processes, poor quality of the product, and great difficulty in recycling of the end product.
- Need for a huge economic investment in machinery and its maintenance.
- Need to have strains of live and active microorganisms in order to accelerate the processes of aerobic and/or anaerobic fermentation of the organic matter.
- High cost of acquisition, assembly and maintenance of the systems for separation, treatment, ducting, etc

It was therefore a desirable objective to be able to have a technology for the treatment of urban and industrial waste, solid and semi-solid (=sludges), more particularly waste from water treatment plants, which contain biodegradable organic matter, and which would not require any kind of special machinery, nor any need to carry out specific stages in the process, not based on anaerobic degradation processes, nor which would use inoculations with specific bacterial microorganisms, and which at the same time would accelerate the composting process, and reduce the problems associated with the emission of leachates and bad odours.

### DESCRIPTION OF THE INVENTION

The aim of the present invention is to achieve the objective stated above by means of a composition and a method for treating solid waste and semi solid (sludges), urban or industrial, waste, preferably waste from water treatment plants, which contain biodegradable organic matter, whose composition is a mixture of particles of red algae (division *Rhodophyta)* and particles of brown algae (division *Phaeophyta*), both dehydrated and chemically untreated, in which the method comprises placing the waste in contact with that composition.

In accordance with the invention, the particles of red algae are selected from among particles of calcareous red algae (commonly known as maerl or lithothamne) which can preferably be selected from among particles of calcareous red algae of the genus *Lithothamnion*, particles of calcareous red algae of the genus *Phymatolithon*, particles of non-calcareous red algae selected from among particles of non-calcareous red algae of the genus *Gracilaria,* particles of non-calcareous red algae of the genus *Eucheuma,* particles of non-calcareous red algae of the genus *Kappaphycus*, particles of non-calcareous red algae of the genus *Hypnea*, and combinations of such particles. In turn, the particles of brown algae can be selected from among particles of brown algae of the genus *Macrocystis,* particles of brown algae of the genus *Laminaria,* particles of brown algae of the genus *Ascophyllum,* particles of brown algae of the genus *Ecklonia*, particles of brown algae of the genus *Fucus*, and combinations of them.

In a preferred embodiment of the invention, the composition comprises particles of calcareous red algae of the genera *Lithothamnion* and *Phymatolithon*, particles of non-calcareous red algae of the genera *Gracilaria, Eucheuma, Kappaphycus*, and *Hypnea* and particles of brown algae of the genera *Macrocystis, Laminaria, Ascophyllum, Ecklonia* and *Fucus*

In an additional preferred embodiment of the invention, the composition comprises particles of non-calcareous red algae of the genera *Gracilaria, Eucheuma, Kappaphycus,* and *Hypnea* and particles of brown algae of the genera *Macrocystis, Laminaria, Ascophyllum, Ecklonia* and *Fucus*.

In an additional preferred embodiment of the invention, the composition comprises particles of calcareous red algae selected from among particles of red algae of the genus *Lithothamnion,* particles of calcareous red algae of the genus *Phymatolithon* and combinations of them.

In an additional preferred embodiment of the invention, the composition comprises 3 to 4 parts by dry weight of a first fraction of particles of calcareous red algae, 0 to 1 parts by dry weight of a second fraction of particles of non-calcareous red algae, and from 1 to 2 parts by dry weight of a third fraction of particles of brown algae.

In an additional preferred embodiment of the invention, the composition comprises:

3 to 4 parts by dry weight of a first fraction of particles of calcareous red algae.

0.5 to 1 parts by dry weight of a second fraction of particles of non-calcareous red algae.

1 to 2 parts by dry weight of a third fraction of particles of brown algae.

The particles of calcareous red algae can be, for example, particles of calcareous red algae dehydrated, crushed and ground with a granulometric composition that contains particles between 30 and 600 microns while the particles of non-calcareous red algae can be particles of dehydrated non-calcareous red algae, with particle sizes between 30 and 1200 microns. The particles of dehydrated brown algae can be particles of dehydrated brown algae with particle sizes of between 30 and 1100 microns.

The method of the invention comprises placing the solid and/or semi-solid (sludges), urban and/or industrial waste, preferably from water treatment plants, in contact with the composition defined above, for example by sprinkling or dispersing the composition on such waste which can be present in the form of stored piles in the case of urban solid waste or when dealing with waste present in dumps and composting plants, and/or mixing the composition with such waste. Depending on the composition and degree of hydration of the waste to treat, it is generally sufficient to apply between 1 and 10 kg, and even from 1 to 5 kg, of the composition per metric ton of waste. This application can be carried out using any kind of machinery conventionally used for the application of particulate products.

The application of the composition of the present invention induces a rapid acceleration in the fermentation process, an increase in the temperature of the pile of waste, in the event that said waste is in the form of a pile, an increase in the rate of evaporation and, therefore, a cessation in the discharge of leachates and the reduction or elimination in the emission of bad odours, owing to the reduction in the content of hydrogen sulphide, nitrogen compounds and mercaptans. This rapid acceleration in the process of aerobic degradation is primarily due to the bio-stimulating effect of the algae on the microbial population, both mesophilic and thermophilic.

The waste resulting from the treatment consists of a dry, odourless product and, depending on the proportion and composition of the waste, with a high heat of combustion (between 3,000 and 7,000 kcal), which is perfectly useable as fuel.

### BRIEF DESCRIPTION OF THE FIGURES

Figure 1 shows a graph of the evolution of the temperature of the waste during treatment with the compositions and method of the invention. It can be seen that for refuse treated with compositions according to the invention the deactivation process ends in 6 days.
Figure 2 shows the results of treating the refuse.

### MODES OF EMBODIMENT OF THE INVENTION

The present invention is furthermore illustrated with the following examples.

### EXAMPLE 1

Three batches of dry particles were prepared, namely, a first batch of 60 kg of particles of calcareous red algae of the genus *Lithothamnion*, dehydrated, crushed and ground with a granulometry consisting of mixtures of particles from 30 to 600 microns, a second batch of 20 kg of particles of non-calcareous red algae of the genus *Gracilaria* dehydrated, crushed and ground with a granulometry consisting of mixtures of particles between 30 and 1200 microns, and a third batch of 20 kg de particles of brown algae of the genus *Fucus* dehydrated, crushed and ground with a granulometry consisting of mixtures of particles between 30 and 1200 microns. The three batches were then homogenously fixed and a mixture was obtained consisting of 60% by weight of particles of algae of the genus *Lithothamnion*, 20% by weight of algae of the genus *Gracilaria*, and 20% by weight of algae of the genus *Fucus*.

In a dump, 60 kg of the mixture thus obtained was sprinkled with shovels on a pile of urban waste without separation of fractions according to the type of rubbish and chosen at random, which had a height of approximately 3 metres and a base of approximately 8 × 8 metres deposited on a plastic band with collection of leachates.
- After 24 hours, a drastic reduction could be seen in the discharge of leachates, and after 72 hours there was practically total elimination of the leachates.
- A drastic reduction in the emission of hydrogen sulphide, mercaptans and amines after 24 hours and a practically total elimination after 72 hours
- An almost complete elimination of the content in ammoniacal nitrogenated compounds after 12 hours (for example, from 2,000 ppm to 100 ppm).
   An increase in temperature to 50 °C after 6 hours following the application.
   A final waste, solid and dry, after 2 to 4 days, depending on the environmental conditions.

This trial confirms that the present invention solves the problems described earlier regarding conventional technologies for the elimination and treatment of solid and semi-solid waste with a content of high organic matter, in a manner that is much more economic, without generating any residual contamination, and it does so with a high degree of efficiency on a wide range of types of waste, without the need for machinery or specific processes and, in the case of urban solid waste, a product is obtained that can be recycled as fuel.

### EXAMPLE 2

### TESTS WITH WASTE FROM ECOPARC-2

This example shows the efficacy of the composition and the method of the present invention.
The tests were conducted in the waste elimination centre (C.E.R.) of Zaragoza. The choice was due to the flat impermeable area which the dump has, where the treatments carried out do not harm its proper functioning.
The materials with which the tests were conducted were waste from a treatment plant in Barcelona, known as Ecoparc-2. According to the present, invention the term "refuse" refers to particulate waste, which is the remains of rubbish left after treatment of waste in a recycling plant, and which is thrown onto the dumps; it has an organic matter content of between approximately 15% and 20%.
The products were tested in three samples, operating with different concentrations and treatments.

### PRODUCTS USED

These experiments prove that the compositions used are ecological and capable of rapidly stabilising the organic matter, they are dehydrating and they eliminate bad odours.
Part of these products were marine derivatives and those used in the samples were Biocompost F and Biocomplex, corresponding to mixtures having the following composition: Biocompost F is a mixture of calcareous red algae, non-calcareous red algae and brown algae of the genera *Macrocystis, Ecklonia* and *Fucus*, as defined in this specification.
Biocomplex: is a mixture of non-calcareous red algae and brown algae of the genera *Macrocystis, Ecklonia y Fucus,* as defined in this specification. Moreover an analysis was conducted of the effect of a product that eliminates bad odours caused by the waste; these biochemical deodorants are AM-Flash which are available with different aromas.

### PARAMETERS MEASURED

In all the tests, the parameters measured were:
Odour: It is fundamental to take measurements of this parameter, since if the odour is unacceptable, its later incineration would not be possible. Since this is a very subjective characteristic, for this reason it was decided to use a scale according to the intensity of odour. The proposed scale is shown below:
- Very low: The odour is not noticeable.
- Low: The odour can be perceived but is not annoying.
- Medium: The odour is more noticeable and starts to become unpleasant.
- High: The odour is fairly unpleasant.
- Very high: The odour is overly unpleasant
- Steam: This parameter refers to the observation of the production of steam by the refuse. When fermentation of the organic matter starts inside the pile of waste, the temperatures reach high values which can increase up to 60 °C. For this reason, if the waste emits steam, then one can be sure that the organic matter is fermenting inside the pile.
   This parameter only affirms or denies the existence of fermentation in cases in which the emission of steam is very abundant, then this abundance is mentioned in the tables as being "high". On the other hand, if steam is observed but at just a few points, then it is recorded as being "low"
- Leachate: This refers to whether, when the waste is turned over, the ground is observed to be damp or sodden underneath.
   As in the above parameters, this one too is very important since the moisture present in the waste is a fundamental factor in its later incineration and the possibility of the existence of leachate is a fairly direct measure of a high degree of humidity.
   It is recorded by stating its existence or not: when the ground is dry there is said to be no leachate, and vice versa.
   As well as these parameters, data is also recorded on the weather for the site of the trials, such as relative humidity, precipitation, air speed, wind type, maximum and minimum temperatures, along with different observations of the type of waste, existence of insects, etc
   In the final test it was decided to use a probe of length 1.5 m, capable of easily measuring the temperatures inside the pile of waste. These measurements are very useful for learning the state at which the fermentation of the organic matter is at, and they are shown in °C.
   Various measurements were made of the interior of the pile, with the probe being left at each point for 10 minutes to allow the reading of the measurement to stabilise. A note was also taken of the surface temperature of the pile and the ambient temperature at the moment of the measurements. When the differences in these latter measurements compared to the mean of the interior temperatures approaches zero, this indicates the end of the fermentation of the organic matter.

### TREATMENTS CARRIED OUT

In order to make these materials suitable as alternative fuels, it is necessary to crush the waste beforehand, and this is also advisable for the action of the different compositions on the waste.

In the area where the tests were conducted, the waste was turned over various times, using the appropriate machinery. This turning over is necessary since the presence of oxygen, in other words an aerobic medium, is an indispensable condition if these compositions are going to produce fermentation of the organic matter and act in the right way. The turning over done by the machinery, the shovel, is sufficient for aerating the waste.

Once the waste has been treated, it is important to reduce its size even further, to a diameter less than the first crushing. To do this, the treated materials were taken to León where the best crusher for them is to be found. Once crushed, they were then ready for their subsequent incineration in the Lemona cement plant.

### TEST 1

In this first test, the waste was crushed in Ecoparc-2. A quantity of 1 kg of Biocompost F was then sprinkled onto 5 tn of waste. The crushed waste mixed with Biocompost F was then packed in cylindrical bales for being transported. The shaped bales were collected by a fork-lift truck and stored. These are the bales of waste used in the Zaragoza waste elimination centre in test 1

The test started on Friday, 12/08/05, when the waste arrived at the Zaragoza dump. 19.6 tn of waste mixed with Biocompost F was spread out over the chosen demarcated zone, in a pile of height 0.75 m.

Haltway through the test, some deodorant was added to part of the waste, with a concentration of 750 ml of AM-Flash (from the firm Fragrance Oils (international) Limited) in 15 l of water. The rest was left as before, without deodorant, in order to learn the effect of the AM-Flash on the waste.

It was tested until Friday, 18/08/05, and once a week had passed, this first test was then halted.

Measurements were made of the odour, steam and leachate, and all the outstanding observations were recorded. The waste was turned over whenever it was considered appropriate. The Alkimen laboratory conducted an analysis of the treated waste

### Conclusions of test 1 with the Ecoparc-2 waste

In this experiment it was observed that the pile, which was only treated with Biocompost F and deodorant, managed to stabilised its organic matter after 6 days since after that no steam was seen when turning over the waste, nor was any leachate produced. The odour was of a very low intensity, which was fairly satisfactory since the bad odour possessed by this waste had also managed to be eliminated in a week.

On the other hand, in the test with Biocompost F but without deodorant, when the waste was turned over on the last day, steam was still being given off, which meant that the organic matter was still fermenting. The bad odour, though not so intense as on the first day, become stronger again after turning over the addition of deodorant in the treatment is therefore indispensable.

The following table shows the results obtained in the test

**Table 1**

| | Friday | Wednesday | | Thursday | | Friday | |
|---|---|---|---|---|---|---|---|
| | **12/08/05** | **17/08/05** | | **18/08/05** | | **19/08/05** | |
| **refuse** | all | **A** | **B** | **A** | **B** | **A** | **B** |
| **odour** | high | high | high | medium | very low | medium | very low |
| **steam** | no | yes | yes | yes | yes | yes | No |
| **leachate** | no | no | no | no | no | no | No |
| **turning** | no | yes | yes | yes | no | yes | No |

| | | | | | | | |
|---|---|---|---|---|---|---|---|
| All: 19.6 tn of waste from ECOPARC-2 with a concentration of 1 kg of Biocompost F / 5 tn of waste A: 14 7 tn of waste left under the same condition as on Friday 12/08/05 B: 4.9 tn of waste, was the same condition as on Friday 12/08/05 but to which 750 ml of AM-Flash deodorant in 15 l of water was added on 17/08/2005. | | | | | | | |

### TEST 2

Following the previous results, in this test the concentration of Biocompost F was increased and AM-Flash was added. This test also lasted for a week and the waste came from Ecoparc-2 as in the previous test, and it was crushed in the same way. A quantity of 1.3 Kg. of Biocompost was added or each ton of waste and this time the deodorant AM-Flash was applied from the beginning, in an amount of 200 ml of deodorant diluted in 15 l of water.

In this case, the waste was not packed in cylindrical bales in order to avoid extra work in opening the bales and to simplify the processes as far as possible. In this test, the waste with Biocompost F and the deodorant was loaded in transport boxes.

On Wednesday, 24 August 2005, the waste arrived in Zaragoza, a total of 18,260 kg. This amount was divided into two parts.
- Waste A: 9,660 kg of waste was spread in rows of height 0.50 m.
- Waste B: The other part, amounting to 8,600 kg, was loaded in a truck destined for Ardoncino (León).
   Waste A remained in Zaragoza in order to check its evolution and waste B, after being analysed, was sent to León for crushing, and from there to the cement plant of Lemona for tests as an alternative fuel.
   In Ecoparc-2, the experiment was performed as in test 1, with more waste and it was treated in the same way as that which arrived in Zaragoza on 24/08/2005. In total there was 12,820 kg of waste, which was known as Waste C.
   Test 2 was regarded as completed on Wednesday 26/08/05, and at the end of the test a check was made of the efficiency of these concentrations and treatment.

### Conclusions of lest 2 with the Ecoparc-2 waste

It was observed that after 5-6 days with the compositions used: 1.3 kg of Biocompost F algae per ton of waste and 200 ml of AM-Flash diluted in 15 l of water, the waste had an acceptable odour, there was little dampness and, from the fermentation of the organic matter, it could be affirmed that the deactivation process had ended after 6-7 days
The following table shows the results obtained in the test

**Table 2**

| | **Wednesday** | | **Thursday *** | | **Friday** | | **Monday** | | **Tuesday** | | **Wednesday** | |
|---|---|---|---|---|---|---|---|---|---|---|---|---|
| | **24/08/05** | | **25/08/2005** | | **26/08/2005** | | **29/08/05** | | **30/08/05** | | **31/08/05** | |
| **refuse** | **A** | **B** | **A** | **C** | **A** | **C** | **A** | **C** | **A** | **C** | **A** | **B** |
| **odour** | HI | HI | HI | M | M | M | M | M | M | M | low | low |
| **steam** | no | no | no | yes | yes | yes | yes | yes | yes | yes | no | no |
| **leachate** | no | no | no | no | no | no | no | no | no | no | no | no |
| **turning** | no | no | no | no | yes | yes | no | no | yes | yes | yes | yes |

| | | | | | | | | | | | | |
|---|---|---|---|---|---|---|---|---|---|---|---|---|
| *: more deodorant was added **A**: 9,660 kg of waste from ECOPARC-2 with a concentration of 1.3 kg of Biocompost F/ 1,000 kg of waste and AM-Flash in a concentration of 200 ml in 15 l of water **B**: 8,600 kg of waste identical to sample A, but destined for León on Wednesday 24/08/05, **C**: 12,820 kg de waste which arrived on Thursday 25/08/05 with the same characteristics as waste A. HI: High **M**: Medium | | | | | | | | | | | | |

### TEST 3

In this final test it was wished to check the effect of the treatment over a period of 6 days, taking daily measurements of the interior and surface temperatures of the samples. These measurements were tor checking the efficacy of the mixtures of the present invention.

The waste was crushed as the previous experiments in Ecoparc-2, but the waste from the treatment was added in the Zaragoza dump. The Novotec laboratory carried out the analysis of this waste before and after treatment with the compositions of the invention.

On Tuesday, 27/09/05, the waste was received from Barcelona, and it was divided into two piles, one of 580 kg which was the control for comparing with the treated refuse and for verifying the effect of this treatment. Another much larger pile of 14,000 kg was used for conducting the samples with the treatment

1 kg of 90% Biocompost F alga product and 10% Biocomplex per ton of waste were added to the sample. For the sample on 14,000 kg, 14 kg of marine products were added: 12.6 kg of Biocompost F + 1.4 kg of Biocomplex.

In order to eliminate the odour, AM-Flash deodorant was sprinkled at a concentration of 100 ml of AM-Flash in 10 litres of water.
Daily measurements were taken of the temperatures and also of the other parameters.

### Conclusions of test 3 with the Ecoparc-2 waste

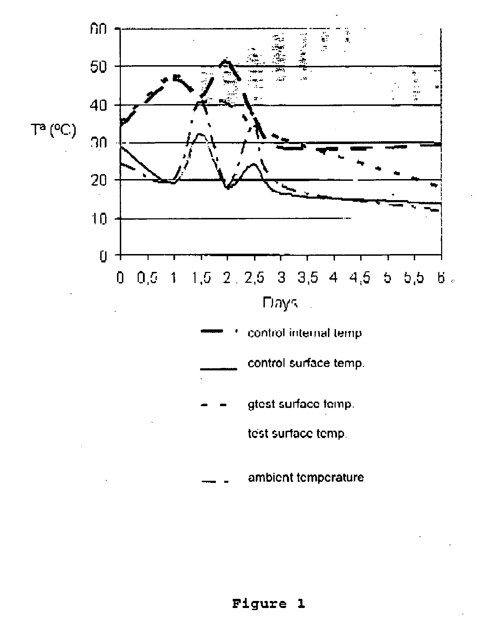

The graph of figure 1 shows the comparison of the temperatures in the sample on the treated refuse and the control, over the course of 6 days.
As can be seen in figure 1, when the test started, the mean interior temperatures in the pile were similar, 35 °C .

On the first day, the temperatures were measured in the two piles and there had been a rise of 10 °C, in other words, the organic matter was fermenting. When the piles were turned over, the odour still had a high intensity, and no steam could yet be seen.

On the second day of the test, the measurements were fairly different, and in the control the mean interior temperature reached 50 °C, while in the sample it has a mean value of 40 °C. In both cases, steam was emitted when turned over

As can be seen in figure 1 the highest peak of the mean interior temperature in the control is on the second day, while in the sample the highest peak in the measurement is on the previous day, in other words the fermentation had accelerated. It was also observed that, from the moment the sample reached its highest point, on the first day, its temperature started to fall continuously, as far as the sixth day, when the interior temperature of the sample was similar to the surface temperature of the same pile and to the ambient temperature On the other hand, in the untreated control, the interior temperature did not fall so fast nor so proportionally until after 17 days.
The following table shows the results obtained for test 3:

| | **Tuesday** | **Wednesday** | **Wednesday** | **Thursday** | **Thursday** | **Monday** |
|---|---|---|---|---|---|---|
| | **27/09/2005** | **28/09/2005** | **28/09/2005** | **29/09/2005** | **29/09/2005** | **03/10/2005** |
| time | 16.30 | 8.55 | After turning over | 8.35 | After turning over | 8.30 |
| Amb temp. (°C). | 24.3 | 19.8 | | 18.1 | | 11.7 |
| Wind sp. (km/h) | 0 | 5 | | 8 | | 5 |

| **CONTROL** | **CONTROL** | **CONTROL** | **CONTROL** | **CONTROL** | **CONTROL** | **CONTROL** |
|---|---|---|---|---|---|---|
| T1 | 35.6 | 54 | 37.5 | 48.5 | 47.6 | 22.8 |
| T2 | 32.8 | 38.5 | 46 | 54.7 | 25.4 | 35.4 |
| Mean temp | 34.2 | 46.25 | 41.75 | 516 | 36.5 | 29.1 |
| Highest temp. | 29 | 19.1 | 32.2 | 17.9 | 24.1 | 13.7 |
| Diff amb temp. mean temp | 9.9 | 26.45 | 14.55 | 33.5 | 13.5 | 17.4 |
| Diff. highest temp - mean temp. | 5.2 | 27.15 | 9.55 | 33.7 | 12.4 | 15.4 |
| Odour | high | high | high | medium | medium | low |

| **SAMPLE** | **SAMPLE** | **SAMPLE** | **SAMPLE** | **SAMPLE** | **SAMPLE** | **SAMPLE** |
|---|---|---|---|---|---|---|
| T1A | 31.3 | 31 | 42.3 | 58.2 | 42.9 | 15.3 |
| T1B | 32.7 | 55.1 | 36.9 | 30.8 | 22 | 14.6 |
| T2A | 41.5 | 42 | 49.5 | 61.4 | 58.8 | 15.1 |
| T2B | 32.7 | 55.1 | 36.9 | 30.8 | 22 | 14.6 |
| T2A | 41.5 | 42 | 49.5 | 61.4 | 58.8 | 15.1 |
| T3A | 34.3 | 50 | 36.7 | 26.1 | 44.1 | 37.4 |
| T3B | 36.7 | 54 | 31.5 | 30.5 | 18.3 | 12.5 |
| Mean temp | 35.25 | 47.42 | 40.83 | 40.40 | 34.52 | 17.93 |
| Highest temp | 31.5 | 19.9 | 31.3 | 19.9 | 26.5 | 14.2 |
| Diff. amb. temp. - mean temp. | 10.97 | 27.62 | 13.63 | 22.30 | 11.62 | 6.23 |
| Diff. highest temp - mean temp. | 3.75 | 27.5 | 9.5 | 20.5 | 8.0 | 3.7 |
| Odour | high | high | high | medium | medium | low |

| **TURNING** | **TURNING** | **TURNING** | **TURNING** | **TURNING** | **TURNING** | **TURNING** |
|---|---|---|---|---|---|---|
| Odour | high | high | | medium | | not done |
| steam | yes | a little | | a lot | | no |
| leachate | no | no | | no | | no |
| time | | 16.30 | | 16.30 | | |
| Amb. temp. (°C) | | 27.2 | | 23 | | |
| Wind sp (km/h) | | 0 | | 28 | | |

| | | | | | | |
|---|---|---|---|---|---|---|
| sp. = speed amb. = ambient CONTROL: 580 kg of refuse SAMPLE Refuse from Ecoparc-2 with a concentration of 1 kg of marine product with a mixture of 90% of Biocompost F and 10% of Biocomplex per ton of refuse. As well as 100 ml of AM-Flash in 10 l of water | | | | | | |

### EXAMPLE 3

The source of the refuse is the waste remaining following treatment of refuse in a recycling plant. With the current more sophisticated means of sorting and recycling the refuse percentage in a recycling plant reaches up to 55 % of the incoming material. After passing through the treatment plant, urban solid waste normally consists of.
- organic matter: 40 - 45 %
- recyclable products: 6 - 12% and
- refuse 62 - 41 %

The treatment of the refuse with compositions according to the invention produces a final waste with a high calorific value.

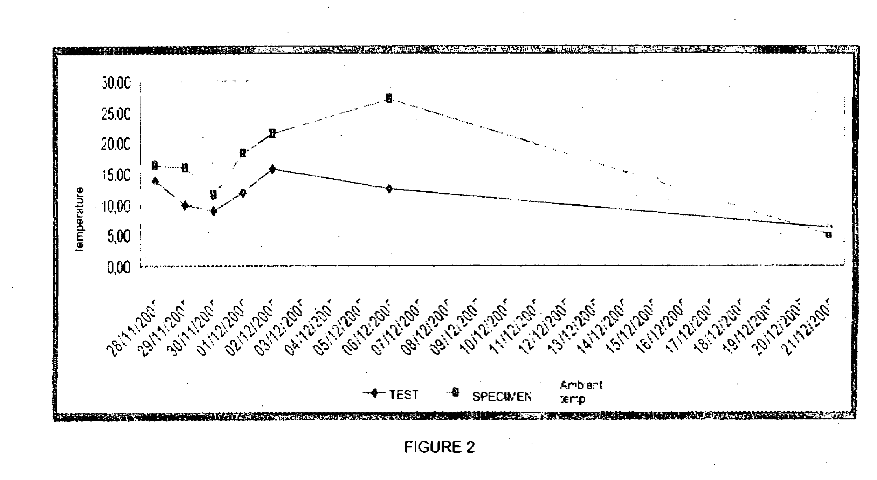

Treatments of refuses have been carried out with compositions of the invention in which a study was made of the temperature curve obtained over a period of approximately three weeks, the result of which is shown in figure 2

The uses of the materials obtained following treatment of solid waste with the compositions of the present invention are very varied and these materials can, tor example be used in multicombustible power plants, in heating plants and in cement plants.

## Claims

1. A composition for treating solid waste and semi-solid waste (sludges), urban or industrial, containing biodegradable organic matter, **characterised in that** the composition is a mixture of particles of red algae (division *Rhodophyta*) and particles of brown algae (division *Phaeophyta),* both dehydrated and chemically untreated.

2. A composition according to claim 1, **characterised in that** the particles of red algae are selected from among particles of calcareous red algae, particles of non-calcareous red algae, and combinations thereof.

3. A composition according to claim 1 or 2, **characterised in that** il comprises:
3 to 4 parts by dry weight of a first traction of calcareous red algae particles
0 to 1 parts by dry weight of a second fraction of non-calcareous red algae particles
1 to 2 parts by dry weight of a third fraction of brown algae particles.

4. A composition according to claim 1 or 2, **characterised in that** it comprises:
3 to 4 parts by dry weight of a first fraction of calcareous red algae particles
0.5 to 1 parts by dry weight of a second fraction of non-calcareous red algae particles
1 to 2 parts by dry weight of a third fraction of brown algae particles.

5. A composition according to claim 2 or 3, **characterised in that** the calcareous red algae particles are selected from calcareous red algae particles of the genus *Lithothamnion,* calcareous red algae particles of the genus *Phymatolithon* and combinations thereof.

6. A composition according to claim 2 or 3, **characterised in that** the non-calcareous red algae particles are selected from non-calcarcous red algae particles of the genus *Gracilaria*, non-calcareous red algae particles of the genus *Eucheuma,* non-calcareous red algae particles of the genus *Kappaphycus*, non calcareous red algae particles of the genus *Hypnea* and combinations thereof.

7. A composition according to claim 1, 2 or 3, **characterised in that** the brown algae particles are selected from brown algae particles of the genus *Macrocystis*, brown algae particles of the genus *Laminaria*, brown algae particles of the genus *Ascophyllum,* brown algae particles of the genus *Ecklonia*, brown algae particles of the genus *Fucus*, and combinations thereof.

8. A composition according to any of claims 1 to 4, **characterised in that** it comprises calcareous red algae particles of the genera *Lithothamnion* and *Phymatolithon,* non-calcareous red algae particles of the genera *Gracilaria, Eucheuma, Kappaphycus* and *Hypnea,* and brown algae particles of the genera *Macrocystis, Laminaria, Ascophyllum, Ecklonia* and *Fucus*

9. A composition according to any of claims 1 to 4, **characterised in that** it comprises non-calcareous red algae particles of the genera *Gracilaria, Eucheuma, Kappaphycus* and *Hypnea,* and brown algae particles of the genera *Macrocystis, Laminaria, Ascophyllum, Ecklonia* and *Fucus*.

10. A composition according to any of claims 2 to 9, **characterised in that** the calcareous red algae particles are calcareous red algae particles that are dehydrated, crushed and ground with a granulometric composition that contains particles of between 30 and 600 microns.

11. A composition according to any of claims 2 to 9, **characterised in that** the non-calcareous red algae particles are dehydrated non-calcareous red algae particles with a particle size of between 30 and 1200 microns.

12. A composition according to any of above claims, **characterised in that** the dehydrated brown algae particles are dehydrated brown algae particles with a particle size of between 30 and 1200 microns.

13. A method for treating solid and/or semi-solid waste containing biodegradable organic matter, **characterised in that** it consists of placing the waste in contact with the composition defined in any of claims 1 to 12.

14. A method according to claim 11, **characterised in that** the waste is solid and semi-solid waste (sludges), urban and industrial, and **in that** a quantity of the composition is dispersed sufficient for applying from 1 to 10 kg of the mixture of particles per metric ton of the waste.

15. A method according to claim 13, **characterised in that** the waste is solid and semi-solid waste (sludges), urban and industrial, and **in that** a sufficient quantity of the composition is dispersed for applying from 1 to 5 kg of the mixture of particles per metric ton of the waste.

16. A method according to claim 14 or 15, **characterised in that** the composition is dispersed on a pile of urban solid waste.
